# EUROPEAN PATENT SPECIFICATION

(11) **EP 3 709 462 B1**
(45) Date of publication and mention of the grant of the patent: **27.12.2023**
(21) Application number: 19162509.4
(22) Date of filing: 13.03.2019
(51) Int. Cl.: H02G 3/08, H02G 3/20, H02G 3/14, F16L 25/00, F16L 25/14, H02G 3/06, H02G 3/12

(54) **ASSEMBLY OF A DISTRIBUTION BOX AND ELECTRIC INSTALLATION MATERIAL, AND AIRTIGHT INSERT**
ANORDNUNG AUS VERTEILERKASTEN UND ELEKTRISCHEM INSTALLATIONSMATERIAL SOWIE LUFTDICHTER EINSATZ
ENSEMBLE DE BOÎTE DE DISTRIBUTION, MATÉRIEL D'INSTALLATION ÉLECTRIQUE ET INSERT ÉTANCHE À L'AIR

(43) Date of publication of application: 16.09.2020
(73) Proprietor: ABB Schweiz AG, 5400 Baden (CH)
(72) Inventor: Renckens, Tom, 3742 ND Baarn (NL); Goor, Gert, 3772 NN Barneveld (NL)
(74) Representative: van Trier, Norbertus Henricus Gerardus

(56) References cited:
- JP-A- H07 274 346
- US-A1- 2009 255 703
- US-A1- 2012 222 880

## Description

### BACKGROUND

The invention relates to an assembly of a distribution box and electric installation material with electric wirings, wherein the distribution box comprises a top wall and a circumferential wall upright from the top wall, wherein the top wall and the circumferential wall together enclose an installation space for installation material, wherein the distribution box comprises a bottom plane, opposite to the top wall, in which an installation opening is provided, wherein the circumferential wall is provided with one or more wire openings for electric wirings to pass through the circumferential wall. The invention further relates to a distribution box and an airtight insert.

Furthermore, the invention relates to a method for mounting a separate airtight insert in a distribution box of an assembly of a distribution box and electric installation material with electric wirings.

Distribution boxes having a bottom wall, opposite to the top wall, with an installation opening, and a lid to be arranged at the installation opening, are applied in electric installations, for example, in utility constructions, wherein the distribution boxes are installed in hollow ceilings. Ends of electric cables or wires of the electric installations are inserted through the wire openings into the distribution boxes to be connected to further installation material, such as a lamp which is installed onto the front plate of the hollow ceiling.

An electrical box is known from US 2012/0222880 describing an electrical box including a panel that is coupled to a top side of the electrical box. The panel may include a wall on one side of the panel, the wall surrounding a well, in the first panel, into a space in the electrical box. The panel may also include a cap to be placed over the wall and the well. The cap and the well may be configured to form a first bend and a second bend on a cable that extends from outside of the electrical box to an inside space of the electrical box. The first bend may include a locally lowest point on cable portions that are outside of an area under the cap.

JP H07-274346 describes a dust-proof packing comprising a box body being inserted into a box, and an integral flange plate fixed entirely around the opening of the body while directing outward, wherein the body comprises a telescopic peripheral wall.

### SUMMARY OF THE INVENTION

The known distribution boxes are installed in hollow ceilings. These hollow ceilings typically have a hollow space above the ceiling plates, usually gypsum. A disadvantage is that the lids of the distribution boxes are not completely closed and, therefore, air can flow freely from the hollow space to below the ceiling plates, or vice versa. Such air flow affects the temperature of the air below the ceiling plates, causing the thermal energy below the ceiling plates to decrease. Decreasing of the temperature below the ceiling plates must be compensated, for example, by a central heating, thereby increasing energy consumption. Further, dust being present within the hollow space can be moved towards below the ceiling plates, thereby polluting the air below the ceiling plates or thereby polluting (blackening) the ceiling plates themselves which is not preferred from an aesthetical point of view. The air quality below the ceiling plates, thus, is decreased by the dust from the hollow space above the ceiling plates.

It is an object of the present invention to provide an improved distribution box, or to provide an alternative distribution box.

The invention provides an assembly of a distribution box and electric installation material with electric wirings, according to the independent claim 1.

During use, the distribution box, for example, is mounted at a ceiling plate of a hollow ceiling, wherein the installation opening of the distribution box is arranged within an opening provided within the ceiling plate. Usually, the distribution box is arranged at the opening within the ceiling plate, such that an air flow along the outer side of the distribution box and through the opening within the ceiling plate is prevented. Additionally, the separate airtight insert is mounted at the installation opening in such way that the installation opening of the distribution box is closed off substantially airtight. Because of the installation opening being closed off substantially airtight, air is prevented from flowing from a hollow space above the ceiling plate through the distribution box towards a room below the ceiling plate, and *vice versa.* By preventing the air flow from and towards the hollow space above the ceiling plate, influence on the air temperature and/or air quality of the air within the room below the ceiling plate by the air within the hollow space above the ceiling plate is reduced or in the ideal case eliminated. Additionally, pollution (blackening) of the ceiling plates is reduced or in the ideal case eliminated.

In the context of the present patent application, airtight has to be understood as impermeable to air or nearly so, or not permitting the passage of air either in or out the distribution box via the installation opening.

According to the invention, the distribution box comprises a bottom wall, opposite to the top wall, having the installation opening provided therein, wherein the airtight insert is configured to be received within the installation opening. The bottom wall comprises a bottom body and an installation edge standing upright from the bottom wall. Preferably the installation edge is standing upright from the bottom wall in a direction away from the installation space. The installation opening is delimited by the installation edge. An advantage of receiving the separate airtight insert by an installation edge delimiting the installation opening is that the airtight insert can be installed relatively easily by placing the airtight insert within the installation edge and, thus, the installation opening. Additionally, it can be advantageous that the airtight insert can be placed in abutting contact with an inner circumference of the installation edge, therewith contributing to the airtightness accomplished by the airtight insert.

According to the invention, the airtight insert comprises an insert body. Preferably the airtight insert is made of a soft material, such as plastic, or in a 2K plastic with a soft and hard plastic combined. According to the invention, the insert body comprises an insert edge standing upright from the insert body, and an engaging edge provided at the rim of the insert edge facing away from the insert body, wherein the engaging edge extends substantially radially outwards with respect to the insert edge in a plane parallel to the insert body, wherein the engaging edge is configured to be in engagement with the inner circumference of the installation edge when the airtight insert is received within the installation opening. When the separate airtight insert is received within the installation opening, the engaging edge is in abutting contact with the inner circumference, *i.e.* the inner circumference of the installation edge directed towards the installation opening, of the installation edge. An advantage of these features is that airflow between the outer circumference of the airtight insert, *i.e.* the circumference facing the inner circumference of the installation edge, and the inner circumference of the installation edge is substantially prevented.

According to the invention, the insert body has one or more passages for electric wirings to pass through the insert body. The one or more passages are target fractures, each of the one or more target fractures comprising a membrane to be penetrated by electric wirings to pass through the airtight insert. When an electric wire has penetrated the membrane of one of the one or more target fractures, the membrane will abut the electric wire in a clamping manner over a few millimeters or less in length, like a cuff, such that an airtight seal is provided. An advantage of these features is that the separate airtight insert provides airtightness of the installation opening when no electric wirings are passing through the installation opening and when electric wirings are passing through the installation opening and, thus, the airtight insert.

In an embodiment, the distribution box comprises a lid configured to be arranged within or at the installation opening, wherein the airtight insert is configured to be placed between the lid and the installation space. Preferably the lid has a lid body with one or more wiring openings for electric wirings to pass through the lid body. In practice, such a lid can be used in order to hang, for example, a lamp to the distribution box. An advantage of this embodiment is that the installation opening is closed off substantially airtight, while the distribution box has maintained its original functions, such as installing a lamp to the ceiling.

In an embodiment, the one or more passages of the insert body are arranged such that they are located in proximity of a corresponding one of the one or more wiring openings of the lid body. Preferably the one or more passages are arranged substantially straight above the corresponding one of the one or more wiring openings. An advantage of this embodiment is that an electric wire passing through the airtight insert can pass through the lid almost directly, such that space needed between the airtight insert and the lid can be kept to a minimum.

In an embodiment, the lid comprises a terminal block chamber configured for receiving a terminal block, wherein the terminal block chamber extends in a direction towards the airtight insert, and wherein the airtight insert has an insert receiving chamber configured for receiving the terminal block chamber of the lid at least partially. Preferably the insert receiving chamber has an engaging indentation. Preferably the insert receiving chamber has four side walls and a bottom wall that together define a receiving space for receiving the terminal block chamber of the lid at least partially, wherein the engaging indentation is provided partially in one of the side walls and partially within the bottom wall. An advantage of this embodiment is that the terminal block can be received within the lid and, at least partially, within the airtight insert, such that the surface of the lid directed towards the room below the ceiling can be kept substantially flat. Therefore, it is possible to mount a lamp to the ceiling and the distribution box without leaving space between the lamp and the ceiling.

In an embodiment, the lid body comprises one or more through-holes through which a screw is able to pass. Preferably the lid body has one or more screw recesses with the one or more through-holes arranged therein, wherein a screw head can be received within the one or more screw recesses. In a further embodiment thereof, the insert body comprises one or more securing channels each formed by a radially inwards securing indentation provided in the insert edge of the insert body, wherein each of the one or more securing indentations has an indentation bottom with a screw opening for allowing a screw to pass there through when inserted into the lid. Preferably the assembly further comprises one or more fixing bushes configured for receiving the screw(s) and for being received within the one or more securing channels, thereby clamping the airtight insert between the lid and the one or more fixing bushes, wherein the distribution box comprises one or more receiving busses with a receiving opening and a receiving channel, wherein the one or more receiving busses are arranged at the inner side of the distribution box and arranged for receiving the one or more fixing bushes to secure the lid and the airtight insert to the distribution box. An advantage of this embodiment is that the airtight insert can be secured to the lid of the distribution box, such that the orientation of the airtight insert with respect to the installation opening, *i.e*. a plane extending through the airtight insert is substantially parallel to a plane extending through the installation opening, is maintained. Additionally, when a force is applied to the airtight insert, for example during penetrating the airtight insert by an electrical wire, the airtight insert remains in position, such that the installation opening remains closed off substantially airtight.

In an embodiment thereof, each of the one or more fixing bushes has a first portion and a second portion, preferably different from the first portion, preferably wherein the first portion is a tubular portion and the second portion is a polygonal portion, wherein the receiving channel of each of the one or more receiving busses comprises a tubular portion for receiving the tubular portion of one of the one or more fixing bushes, and a polygonal portion for receiving the polygonal portion of the one of the one or more fixing bushes. This embodiment has the advantage that due to the tubular portion and the polygonal portion, unintended removal of the airtight insert, optionally in combination with the lid, is prevented.

In another embodiment, each of the one or more fixing bushes comprises a nut.

In addition, the invention provides a method for mounting a separate airtight insert in a distribution box of an assembly of a distribution box and electric installation material with electric wirings, according to claim 10.

The method according to the invention has at least the same advantages that are described in relation to the assembly.

In an embodiment, the distribution box comprises a lid configured to be arranged within or at the installation opening, the method further comprising the step of:
- arranging the airtight insert at the lid, preferably at a side of the lid facing the installation space of the distribution box.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B show an isometric view of a distribution box according to an embodiment of the invention, arranged at a ceiling plate; and a cross-sectional view of the distribution box and the ceiling plate according to line IB in figure 1A, respectively;
Figures 2A - 2D show an isometric view of the distribution box of figure 1A; an exploded view of the distribution box having a top wall, a circumferential wall, a bottom wall, a lid and an airtight insert; an isometric view of the distribution box with the top wall, the lid and the airtight insert removed therefrom; and a cross-section of the distribution box of figure 2A along line IID, respectively; and
Figures 3A - 3C show an isometric view of the lid and the airtight insert; an exploded view of the lid and the airtight insert; and a cross-sectional view of the lid and the airtight insert, respectively.

### DETAILED DESCRIPTION OF THE INVENTION

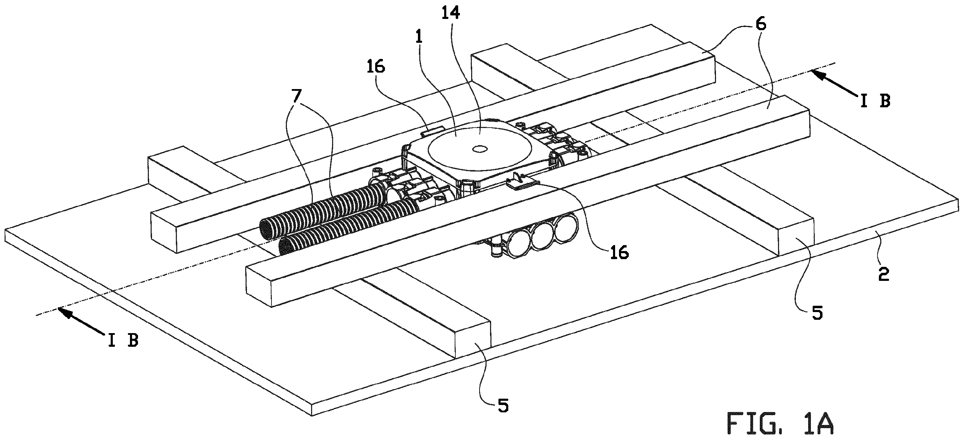

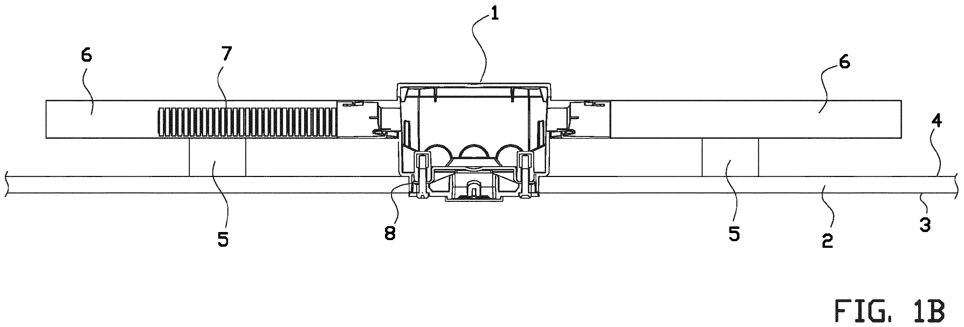

An embodiment of a distribution box 1 is shown in figures 1A and 1B. The distribution box 1 is arranged at a ceiling plate 2, such as plasterboard, having a front side 3 and a back side 4 opposite to the front side 3. The distribution box 1 is secured to the back side 4 of the ceiling plate 2 by means of two transversal beams 5 and two longitudinal beams 6 between which the distribution box 1 is placed. A through hole 8 is provided within the ceiling plate 2, through which the distribution box 1 partially extends and via which the distribution box 1 is accessible. Flexible tubes 7 are connected to the distribution box, via which non-shown electric installation material including electric wirings is guided towards and into the distribution box 1.

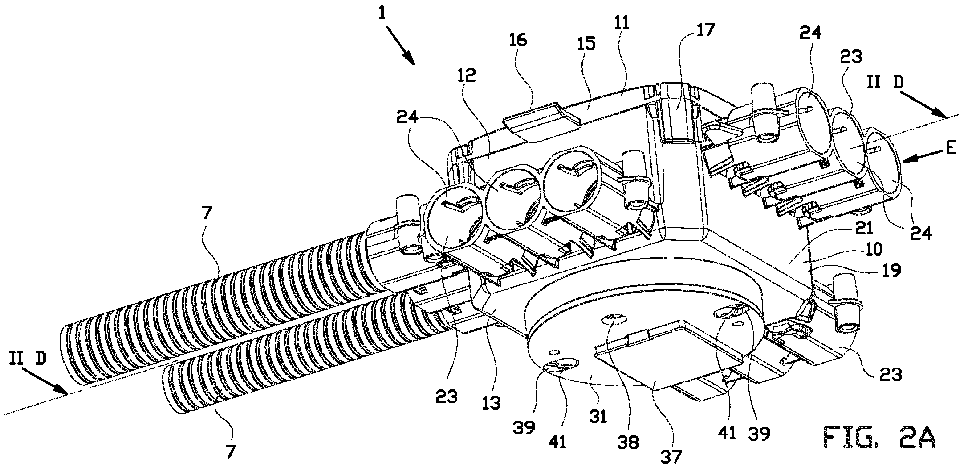

An isometric view of the distribution box 1 is shown in figure 2A. The distribution box 1 comprises a housing 10 having a top wall 11, a circumferential wall 12 upright from the top wall 11, and a bottom wall 13 opposite to the top wall 11. The top wall 11, the circumferential wall 12 and the bottom wall 13 together enclose an installation space for electric installation material. The top wall 11 is removable arranged at the circumferential wall 12, thereby forming a removable top lid 11. The removable top wall 11 comprises a top body 14 which is substantially quadrangular. The top body 11 has an outer circumference, at which an enclosing edge 15 upright from the top body 14 towards the circumferential wall is provided. Abutment flaps 16 are provided at opposite sides of the enclosing edge 15 for abutting to the longitudinal beams 6 when installed at a ceiling plate 2. A first engaging protrusion 17 is provided at each of the corners of the quadrangular top body 14, which first engaging protrusions 17 are arranged for engaging the circumferential wall 12 at the outside thereof. A pair of second engaging protrusions 18 is provided in proximity of each of the first engaging protrusions 17, wherein each pair of second engaging protrusions 18 is arranged for engaging the circumferential wall 12 at the inside thereof. When the top body 14 is placed at the circumferential wall 12, the circumferential wall 12 is received between each first engaging protrusion 17 and the associated pair of second engaging protrusions 18.

The circumferential wall 12 has a wall body 19 with wire openings 20 therein via which electric cables or wires can be inserted into the installation space. The wall body 19 has an outer side 21 and an inner side 22 opposite to the outer side 21. Multiple spouts 23 are arranged at the outer side 21 of the wall body 19, wherein each spout 23 has multiple, in this case three, spout channels 24 extending through the respective spout 23 in an insert direction E substantially perpendicular to the wall body 19 and parallel to the bottom wall 11. Each spout channel 24 is associated with and placed in line with one of the wire openings 20, such that non-shown electric cables or wires can be inserted into the installation space in the insert direction E via the spout channels 24 and the associated cable opening 20.

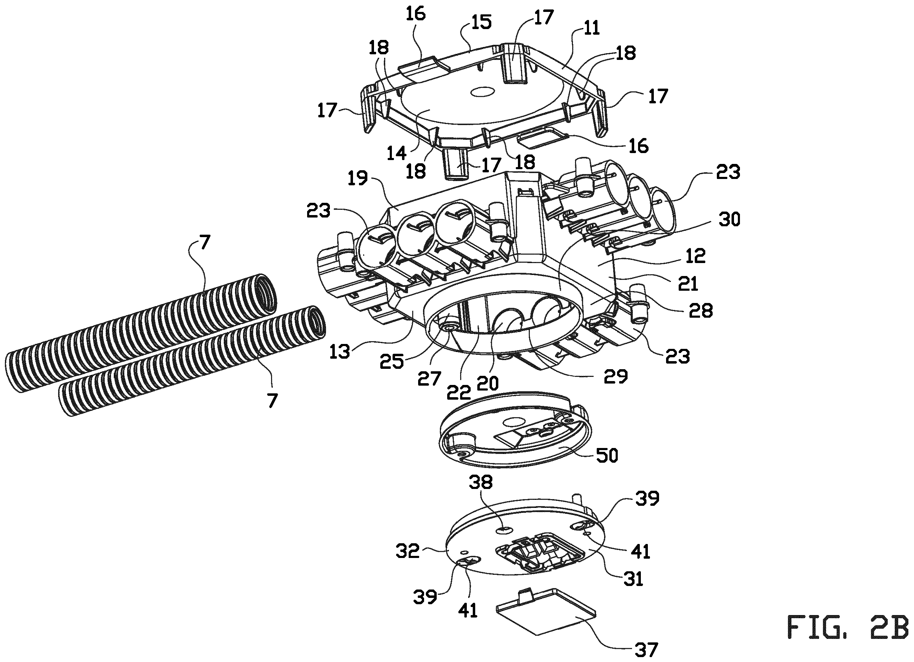

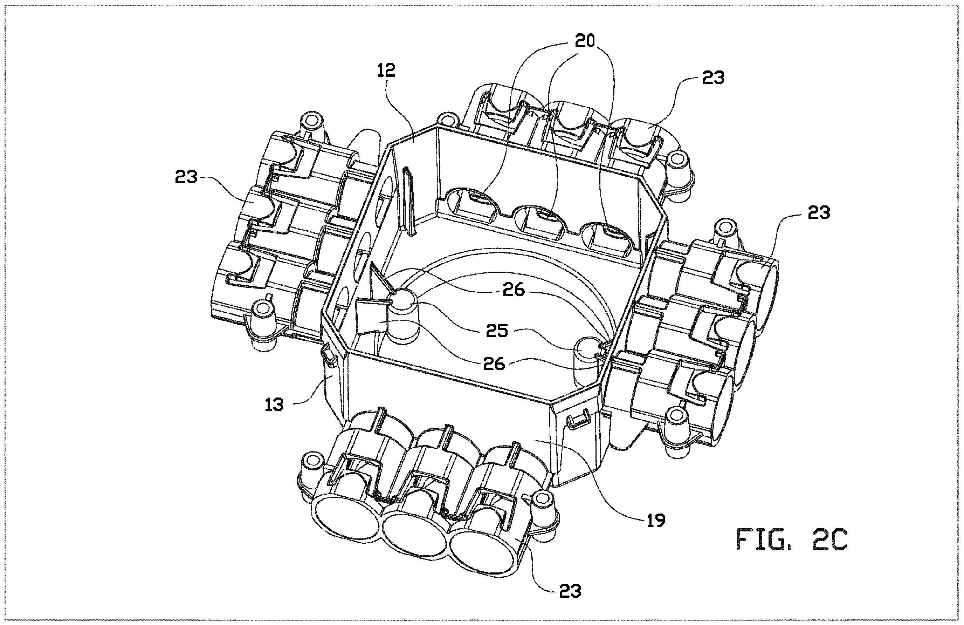

As shown in figures 2B and 2C, two receiving busses 25 are provided within the installation space. A first one of the two receiving busses 25 is arranged at a first surface of the inner side 22 of the circumferential wall 12 and the second one of the two receiving busses 25 is arranged at a second surface, opposite to the first side, of the inner side 22 of the circumferential wall 12. Each of the two receiving busses 25 is secured to the respective surface of the inner side 22 by securing members 26 which are extending at an angle with respect to the respective surface of the circumferential wall 12. The receiving busses 25 are each provided with a receiving opening 27 via which a receiving channel of the respective receiving buss is accessible.

As best shown in figures 2A and 2B, the bottom wall 13 has a bottom body 28 with an installation opening 29 via which the installation space inside the distribution box 1 is accessible. In an installed state of the installation box 1, the installation opening 29 can be used to access the installation space from the side of the ceiling plate 2 directed towards, for example, a room. The installation opening 29 is delimited by an installation edge 30 standing upright from the top body 28 in a direction away from the installation space.

Furthermore, a lid 31 is provided for being installed at the installation opening 29 to close off the installation opening 29 partially. The lid 31 comprises a lid body 32 with a lid edge 33 standing upright from the lid body 32 in the direction towards the installation space of the distribution box 1. The lid 31 is provided with a terminal block chamber 34 for receiving a terminal block 43, wherein the terminal block chamber 34 is formed by a deepening in the lid body 33. The terminal block chamber 34 has a chamber bottom 35 provided with two wiring openings 36 for electric wirings from the electric installation material to pass there through such that the electric wirings can be connected to the terminal block 43 within the terminal block chamber 34. An additional lid 37 is provided for closing off the terminal block chamber 34 at the side opposite to the chamber bottom 35. The additional lid 37 is removable from the lid 31 in order to access the terminal block 43 provided within the terminal block chamber 34. As best shown in figure 2A, the lid 31 comprises an additional wire opening 38 spaced from the additional lid 37, through which additional wire opening 38 electric wiring can pass from and to the installation space.

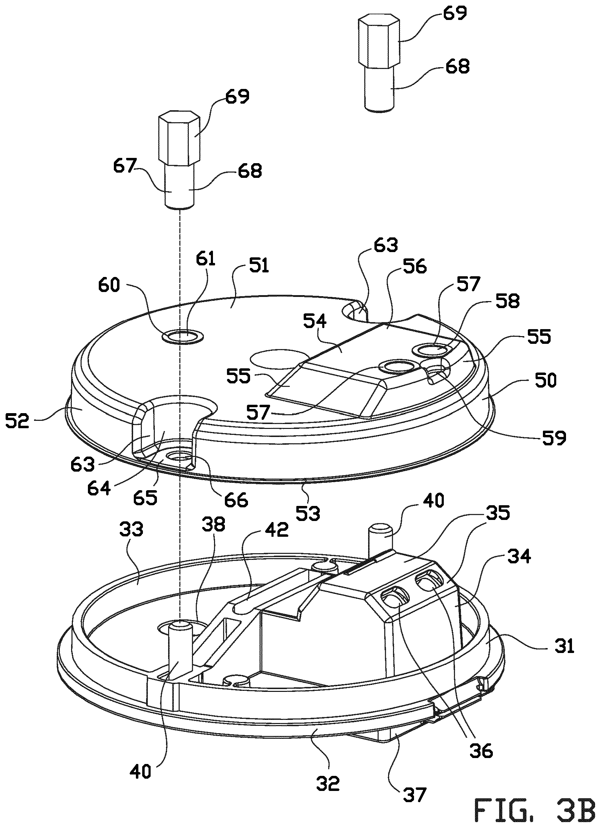

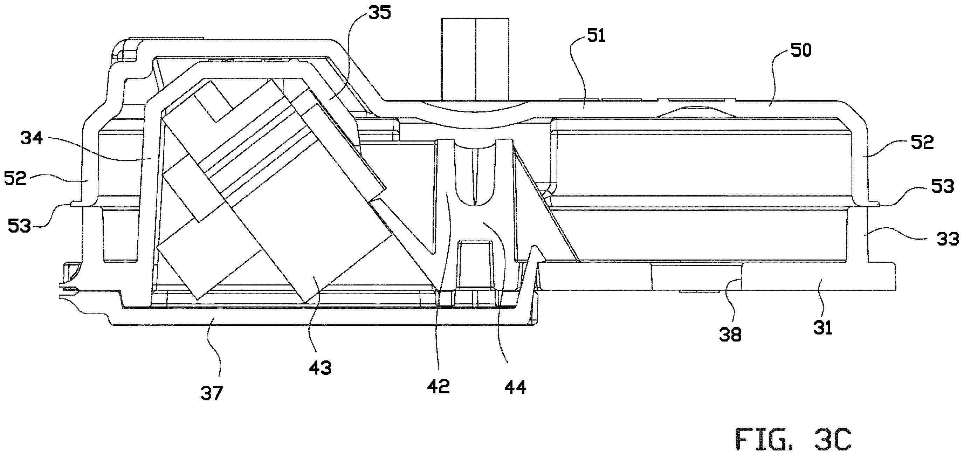

As shown in figures 2A and 3B, the lid 31 has two screw recesses 39 with a through-hole through which a screw 40 is able to pass while the screw head 41 can be received within one of the screw recesses 39. When the screws 40 are arranged within the screw recesses 39 of the lid 31, the receiving busses 25 are enabled to receive the screws 40 in order to secure the lid 31 to the distribution box 1. The lid 31 further includes a hook hanging channel 42 with a hook hanging portion configured for hanging a non-shown hook at the hanging portion 44, for example, for hanging a lamp at the distribution box 1 when installed at the ceiling plate 2.

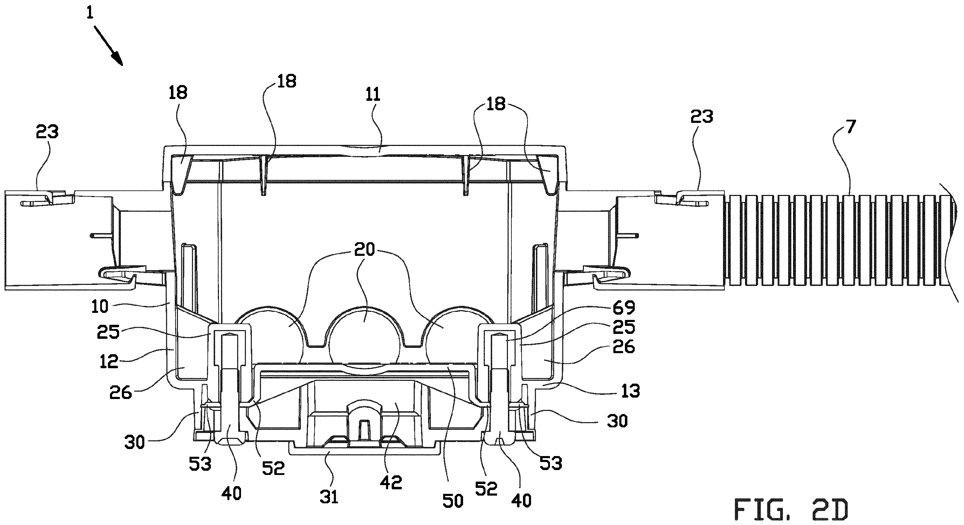

As best shown in figure 2B, the distribution box 1 is provided with an airtight insert 50 on top of the lid 31. From figure 2D, it is clear that the airtight insert 50 is configured for being placed at the installation opening 29 of the distribution box 1 and for being received by the installation edge 30.

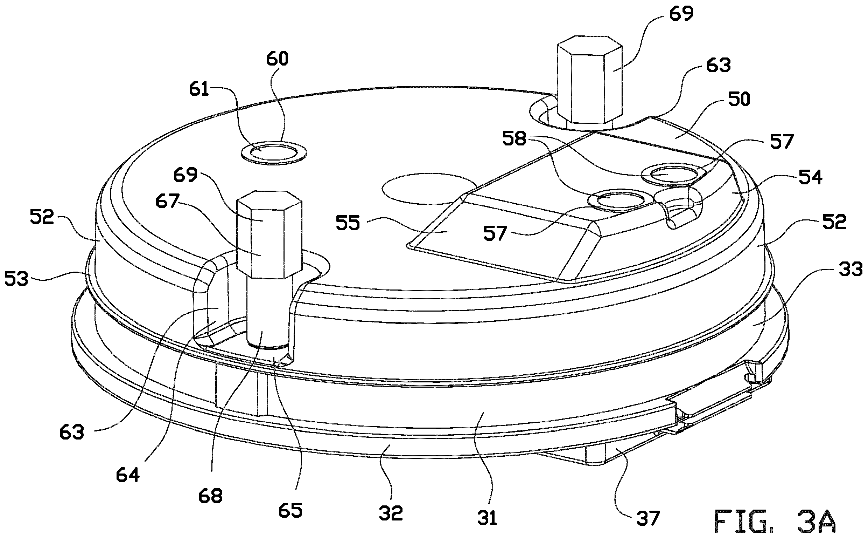

As shown in figures 3A and 3B, the airtight insert 50 has a substantially flat insert body 51. At the outer circumference of the flat insert body 51, an insert edge 52 standing upright from the insert body 51 and extending towards the lid 31 is provided. The rim of the insert edge 52 facing away from the insert body 51 is adapted to be placed in abutting contact with the rim of the lid edge 33 facing away from the lid body 32. An engaging edge 53 is provided at the rim of the insert edge 52, wherein the engaging edge 53 extends substantially radially outwards with respect to the insert edge 52 in a plane parallel to the insert body 51. As shown in figure 2D, when the airtight insert 50 is positioned within the installation opening 29, the engaging edge 53 is in engagement with the inner circumference of the installation edge 30 such that the installation opening 29 is closed off. At least the engaging edge 53 is made of a flexible material in order to provide a sealing engagement of the engaging edge 53 to the inner circumference of the installation edge 30.

As shown in figures 3A and 3B, the insert body 51 of the airtight insert 50 is provided with an insert receiving chamber 54. The insert receiving chamber 54 is positioned such that when the airtight insert 50 is arranged at the lid 31, the insert receiving chamber 54 receives a part of the terminal block chamber 34 of the lid 31. The insert receiving chamber 54 has four side walls 55 and a bottom wall 56 that together define a receiving space for receiving a part of the terminal block chamber 34 of the lid 31. The top side of the insert receiving chamber 54, *i.e.* the side opposite to the bottom wall 56, is open. The bottom wall 56 of the insert receiving chamber 54 is provided with two target fractures 57. Each of the two target fractures 57 is arranged such that it is positioned substantially straight above a corresponding one of the wiring openings 36. Each of the target fractures 57 comprises a membrane 58 which can be punctured by a non-shown electric wire, such that the electric wire can be inserted into the terminal block chamber 34 and can be connected to the terminal block 43. When the electric wire punctures the membrane 58 of one of the target fractures 57, the membrane 58 will abut the non-shown electric wire in a clamping manner over a few millimeters or less in length, like a cuff, such that an airtight seal is provided. An engaging indentation 59 is provided at the insert receiving chamber 54, which engaging indentation 59 is provided partially in one of the side walls 55 and partially within the bottom wall 56.

It is noted that the engaging indentation 59 can be required when the airtight insert 50 is used in combination with a non-shown height adjustment ring, when two non-shown thicker ceiling plates are used instead of one ceiling plate.

As shown in figure 3A, the insert body 51 has an additional target fracture 60 with a membrane 61 to be punctured by a non-shown electric wire, such as the earth wire. The additional target fracture 60 is arranged such that it is positioned substantially straight above the additional wire opening 38.

As shown in figures 3A and 3B, the airtight insert 50 is provided with two securing channels 63 formed by a radially inwards securing indentation 64 provided in the insert edge 52 of the insert body 51. Each securing indentation 64 is provided with an indentation bottom 65, which is located at the rim of the insert edge 52 facing away from the insert body 51. Each of the indentation bottoms 65 has a screw opening 66 for receiving a corresponding screw 40 when inserted into the lid 31.

Furthermore, two fixing bushes 67 are provided, each having a tubular portion 68 and a polygonal portion 69. Each of the two fixing bushes 67 is configured for receiving one of the screws 40 extending through the airtight insert 50, as indicated in figure 3A. Each of the screws 40 is thus received within the corresponding fixing bush 67, in particular the tubular portion 68 thereof.

Each of the two fixing bushes 67 is fixated into one of the receiving busses 25 by placing the respective fixing bush 67 into a mould for producing the distribution box 1 and, for example, injecting the material of the distribution box 1 around the respective fixing bush 67. By the screws 40 being received partially within the fixing bushes 67, the airtight insert 50 is secured to the lid 31, wherein the lid 31 with the airtight insert 50 can be secured to the distribution box 1 by inserting the screws 40 into the fixing bushes 67 within the receiving busses 25 arranged at the circumferential wall 12. The installation opening 29 of the distribution box 1 is than closed off airtight.

## Claims

1. Assembly of a distribution box (1) and electric installation material with electric wirings, wherein the distribution box (1) comprises a top wall (11) and a circumferential wall (12) upright from the top wall (11), wherein the top wall (11) and the circumferential wall (12) together enclose an installation space for installation material, wherein the distribution box (1) comprises a bottom plane, opposite to the top wall, in which an installation opening (29) is provided, wherein the circumferential wall (12) is provided with one or more wire openings (20) for electric wirings to pass through the circumferential wall (12), wherein a separate airtight insert (50) is provided, wherein the separate airtight insert (50) is configured to be mounted in or at the installation opening (29) for substantially closing off the installation opening air tight, wherein the distribution box (1) comprises a bottom wall (13), opposite to the top wall (11), having the installation opening (29) provided therein, wherein the airtight insert (50) is configured to be received within the installation opening (29), wherein the bottom wall (13) comprises a bottom body (28) and an installation edge (30) standing upright from the bottom wall (28), wherein the installation opening (29) is delimited by the installation edge (30), wherein the airtight insert (50) comprises an insert body (51), wherein the insert body (51) comprises an insert edge (52) standing upright from the insert body (51), and an engaging edge (53) provided at the rim of the insert edge (52) facing away from the insert body (51), wherein the engaging edge (53) extends substantially radially outwards with respect to the insert edge (52) in a plane parallel to the insert body (51), wherein the engaging edge (53) is configured to be in engagement with the inner circumference of the installation edge (30) when the airtight insert (50) is received within the installation opening (29), wherein the insert body (51) has one or more passages for electric wirings to pass through the insert body (51), wherein the one or more passages are target fractures (57), each of the one or more target fractures (57) comprising a membrane (58) to be penetrated by electric wirings to pass through the airtight insert (50).

2. Assembly according to claim 1, wherein the installation edge (30) is standing upright from the bottom wall (28) in a direction away from the installation space.

3. Assembly according to any one of the preceding claims, wherein the airtight insert is made of a soft material, such as plastic, or in a 2K plastic with a soft and hard plastic combined.

4. Assembly according to any one of the preceding claims, wherein the distribution box (1) comprises a lid (31) configured to be arranged within or at the installation opening (29), wherein the airtight insert (50) is configured to be placed between the lid and the installation space, wherein the lid (31) has a lid body (32) with one or more wiring openings (36) for electric wirings to pass through the lid body (32).

5. Assembly according to claim 4, wherein the one or more passages of the insert body (51) are arranged such that they are located in proximity of a corresponding one of the one or more wiring openings (36) of the lid body (32), preferably wherein the one or more passages are arranged substantially straight above the corresponding one of the one or more wiring openings (36).

6. Assembly according to any one of the claims 4 or 5, wherein the lid (31) comprises a terminal block chamber (34) configured for receiving a terminal block (43), wherein the terminal block chamber (34) extends in a direction towards the airtight insert (50), and wherein the airtight insert (50) has an insert receiving chamber (54) configured for receiving the terminal block chamber (34) of the lid (31) at least partially, preferably wherein the insert receiving chamber (54) has an engaging indentation (59), preferably wherein the insert receiving chamber (54) has four side walls (55) and a bottom wall (56) that together define a receiving space for receiving the terminal block chamber (34) of the lid (31) at least partially, wherein the engaging indentation (59) is provided partially in one of the side walls (55) and partially within the bottom wall (56).

7. Assembly according to any one of the claims 4 - 6, wherein the lid body (32) comprises one or more through-holes through which a screw (40) is able to pass, preferably wherein the lid body (32) has one or more screw recesses (39) with the one or more through-holes arranged therein, wherein a screw head (41) can be received within the one or more screw recesses (39).

8. Assembly according to claim 7, wherein the insert body (51) comprises one or more securing channels (63) each formed by a radially inwards securing indentation (64) provided in the insert edge (52) of the insert body (51), wherein each of the one or more securing indentations (64) has an indentation bottom (65) with a screw opening (66) for allowing a screw (40) to pass there through when inserted into the lid (31), wherein the assembly further comprises one or more fixing bushes (67) configured for receiving the screw(s) and for being received within the one or more securing channels (63), thereby clamping the airtight insert (50) between the lid (31) and the one or more fixing bushes (67), wherein the distribution box (1) comprises one or more receiving busses (25) with a receiving opening (27) and a receiving channel, wherein the one or more receiving busses (25) are arranged at the inner side (22) of the distribution box (1) and arranged for receiving the one or more fixing bushes (67) to secure the lid (31) and the airtight insert (50) to the distribution box (1).

9. Assembly according to claim 8, wherein each of the one or more fixing bushes (67) has a first portion (68) and a second portion (69), preferably different from the first portion, preferably wherein the first portion is a tubular portion (68) and the second portion is a polygonal portion (69), wherein the receiving channel of each of the one or more receiving busses (25) comprises a tubular portion for receiving the tubular portion (68) of one of the one or more fixing bushes (67), and a polygonal portion (69) for receiving the polygonal portion of the one of the one or more fixing bushes (67), or wherein each of the one or more fixing bushes (67) comprises a nut.

10. Method for mounting a separate airtight insert (50) in a distribution box of an assembly of a distribution box (1) and electric installation material with electric wirings, according to any one of the claims 1 to 9, the method comprising the steps of:
- installing a distribution box (2) at a hollow wall, such as a hollow ceiling (2);
- inserting electric installation material with electric wirings into the distribution box (1);
- making electric connections between electric wirings of the electric installation material; and
- mounting the separate airtight insert (50) in or at the installation opening (29) of the distribution box (1), such that the installation opening is closed off substantially airtight.

11. Method according to claim 10, wherein the distribution box (1) comprises a lid (31) configured to be arranged within or at the installation opening (29), the method further comprising the step of:
- arranging the airtight insert (50) at the lid (31), preferably at a side of the lid (31) facing the installation space of the distribution box (1).

## Patentansprüche

1. Anordnung aus einer Abzweigdose (1) und Elektroinstallationsmaterial mit elektrischen Leitungen, wobei die Abzweigdose (1) eine obere Wand (11) und eine von der oberen Wand (11) senkrecht in die Höhe stehende Umfangswand (12) umfasst, wobei die obere Wand (11) und die Umfangswand (12) zusammen einen Einbauraum für Installationsmaterial umschließen, wobei die Abzweigdose (1) eine der oberen Wand gegenüberliegende Bodenfläche umfasst, in der eine Einbauöffnung (29) vorgesehen ist, wobei die Umfangswand (12) mit einer oder mehr Kabelöffnungen (20) zum Durchführen von elektrischen Leitungen durch die Umfangswand (12) versehen ist, wobei ein separater luftdichter Einsatz (50) vorgesehen ist, wobei der separate luftdichte Einsatz (50) dazu gestaltet ist, in oder an die Einbauöffnung (29) montiert zu werden, um die Einbauöffnung im Wesentlichen luftdicht zu verschließen, wobei die Abzweigdose (1) eine der oberen Wand (11) gegenüberliegende Bodenwand (13) umfasst, in der die Einbauöffnung (29) vorgesehen ist, wobei der luftdichte Einsatz (50) dazu gestaltet ist, in der Einbauöffnung (29) aufgenommen zu werden, wobei die Bodenwand (13) einen Bodenkörper (28) und einen Einbaurand (30), der von der Bodenwand (28) senkrecht in die Höhe steht, umfasst, wobei die Einbauöffnung (29) von dem Einbaurand (30) begrenzt wird, wobei der luftdichte Einsatz (50) einen Einsatzkörper (51) umfasst, wobei der Einsatzkörper (51) einen Einsatzrand (52), der senkrecht vom Einsatzkörper (51) in die Höhe steht, und eine Eingriffskante (53) umfasst, die an dem dem Einsatzkörper (51) abgewandten Rand des Einsatzrands (52) vorgesehen ist, wobei sich die Eingriffskante (53) im Wesentlichen in einer zum Einsatzkörper (51) parallelen Ebene radial nach außen in Bezug auf den Einsatzrand (52) erstreckt, wobei die Eingriffskante (53) dazu eingerichtet ist, im Eingriff mit dem Innenumfang des Einbaurands (30) zu sein, wenn der luftdichte Einsatz (50) in der Einbauöffnung (29) aufgenommen ist, wobei der Einsatzkörper (51) einen oder mehr Durchgänge zum Durchführen von elektrischen Leitungen durch den Einsatzkörper (51) aufweist, wobei der eine oder die mehreren Durchgänge Ausbrüche (57) sind, wobei jeder des einen oder der mehreren Ausbrüche (57) eine Membran (58) umfasst, die von elektrischen Leitungen zum Durchführen durch den luftdichten Einsatz (50) durchdrungen werden soll.

2. Anordnung nach Anspruch 1, wobei der Einbaurand (30) senkrecht von der Bodenwand (28) in einer Richtung weg vom Einbauraum in die Höhe steht.

3. Anordnung nach einem der vorhergehenden Ansprüche, wobei der luftdichte Einsatz aus einem weichen Material, wie Kunststoff, oder einem 2K-Kunststoff, bei dem ein weicher und ein harter Kunststoff kombiniert sind, besteht.

4. Anordnung nach einem der vorhergehenden Ansprüche, wobei die Abzweigdose (1) einen Deckel (31) umfasst, der dazu gestaltet ist, in oder an der Einbauöffnung (29) angeordnet zu sein, wobei der luftdichte Einsatz (50) dazu gestaltet ist, zwischen dem Deckel und dem Einbauraum platziert zu sein, wobei der Deckel (31) einen Deckelkörper (32) mit einer oder mehr Leitungsöffnungen (36) zum Durchführen von elektrischen Leitungen durch den Deckelkörper (32) aufweist.

5. Anordnung nach Anspruch 4, wobei der eine oder die mehreren Durchgänge des Einsatzkörpers (51) derart angeordnet sind, dass sie sich in der Nähe einer entsprechenden einen der einen oder mehreren Leitungsöffnungen (36) des Deckelkörpers (32) befinden, vorzugsweise wobei der eine oder die mehreren Durchgänge im Wesentlichen direkt über der entsprechenden einen der einen oder mehreren Leitungsöffnungen (36) angeordnet sind.

6. Anordnung nach einem der Ansprüche 4 oder 5, wobei der Deckel (31) eine Anschlussblockkammer (34) umfasst, die zum Aufnehmen eines Anschlussblocks (43) gestaltet ist, wobei sich die Anschlussblockkammer (34) in eine Richtung hin zu dem luftdichten Einsatz (50) erstreckt und wobei der luftdichte Einsatz (50) eine Einsatzaufnahmekammer (54) aufweist, die dazu gestaltet ist, die Anschlussblockkammer (34) des Deckels (31) zumindest teilweise aufzunehmen, vorzugsweise wobei die Einsatzaufnahmekammer (54) eine Eingriffsvertiefung (59) aufweist, vorzugsweise wobei die Einsatzaufnahmekammer (54) vier Seitenwände (55) und eine Bodenwand (56) aufweist, die zusammen einen Aufnahmeraum zum zumindest teilweisen Aufnehmen der Anschlussblockkammer (34) des Deckels (31) definieren, wobei die Eingriffsvertiefung (59) teilweise in einer der Seitenwände (55) und teilweise in der Bodenwand (56) vorgesehen ist.

7. Anordnung nach einem der Ansprüche 4 bis 6, wobei der Deckelkörper (32) ein oder mehr Durchgangslöcher umfasst, durch die eine Schraube (40) durchgehen kann, vorzugsweise wobei der Deckelkörper (32) eine oder mehr Schraubenaussparungen (39) mit dem einen oder den mehreren darin angeordneten Durchgangslöchern aufweist, wobei ein Schraubenkopf (41) in der einen oder den mehreren Schraubenaussparungen (39) aufgenommen werden kann.

8. Anordnung nach Anspruch 7, wobei der Einsatzkörper (51) einen oder mehr Befestigungskanäle (63) umfasst, die jeweils von einer Befestigungseinbuchtung (64) radial nach innen gebildet werden, die in dem Einsatzrand (52) des Einsatzkörpers (51) vorgesehen ist, wobei jede der einen oder mehreren Befestigungseinbuchtungen (64) einen Einbuchtungsboden (65) mit einer Schraubenöffnung (66) aufweist, um zu ermöglichen, dass eine Schraube (40) dort hindurch geht, wenn sie in den Deckel (31) eingesetzt wird, wobei die Anordnung ferner eine oder mehr Befestigungshülsen (67) umfasst, die dazu gestaltet sind, die Schraube(n) aufzunehmen und in dem einen oder den mehreren Befestigungskanälen (63) aufgenommen zu werden, wodurch sie den luftdichten Einsatz (50) zwischen den Deckel (31) und die eine oder mehr Befestigungshülsen (67) einspannen, wobei die Abzweigdose (1) einen oder mehr Aufnahmekanäle (25) mit einer Aufnahmeöffnung (27) und einer Aufnahmepassage umfasst, wobei der eine oder die mehreren Aufnahmekanäle (25) auf der Innenseite (22) der Abzweigdose (1) angeordnet und zum Aufnehmen der einen oder mehr Befestigungshülsen (67) eingerichtet sind, um den Deckel (31) und den luftdichten Einsatz (50) an der Abzweigdose (1) zu befestigen.

9. Anordnung nach Anspruch 8, wobei jede der einen oder mehr Befestigungshülsen (67) einen ersten Abschnitt (68) und einen zweiten Abschnitt (69), der vorzugsweise von dem ersten Abschnitt verschieden ist, aufweist, vorzugsweise wobei der erste Abschnitt ein röhrenförmiger Abschnitt (68) ist und der zweite Abschnitt ein polygonaler Abschnitt (69) ist, wobei die Aufnahmepassage von jedem des einen oder der mehreren Aufnahmekanäle (25) einen röhrenförmigen Abschnitt zum Aufnehmen des röhrenförmigen Abschnitts (68) von einer der einen oder mehr Befestigungshülsen (67) und einen polygonalen Abschnitt (69) zum Aufnehmen des polygonalen Abschnitts der einen der einen oder mehr Befestigungshülsen (67) umfasst, oder wobei jede der einen oder mehr Befestigungshülsen (67) eine Mutter umfasst.

10. Verfahren zum Montieren eines separaten luftdichten Einsatzes (50) in eine Abzweigdose einer Anordnung aus einer Abzweigdose (1) und Elektroinstallationsmaterial mit elektrischen Leitungen nach einem der Ansprüche 1 bis 9, wobei das Verfahren die folgenden Schritte umfasst:
- Einbauen einer Abzweigdose (2) bei einer Hohlwand, wie einer Hohldecke (2);
- Einsetzen von Elektroinstallationsmaterial mit elektrischen Leitungen in die Abzweigdose (1);
- Herstellen von elektrischen Verbindungen zwischen elektrischen Leitungen des Elektroinstallationsmaterials; und
- Montieren des separaten luftdichten Einsatzes (50) in oder an die Einbauöffnung (29) der Abzweigdose (1) derart, dass die Einbauöffnung im Wesentlichen luftdicht verschlossen ist.

11. Verfahren nach Anspruch 10, wobei die Abzweigdose (1) einen Deckel (31) umfasst, der dazu gestaltet ist, in oder an der Einbauöffnung (29) angeordnet zu werden, wobei das Verfahren ferner den folgenden Schritt umfasst:
- Anordnen des luftdichten Einsatzs (50) an dem Deckel (31), vorzugsweise auf einer Seite des Deckels (31), die dem Einbauraum der Abzweigdose (1) zugewandt ist.

## Revendications

1. Ensemble d'une boîte de distribution (1) et de matériel d'installation électrique avec des câblages électriques, dans lequel la boîte de distribution (1) comprend une paroi supérieure (11) et une paroi circonférentielle (12) verticale à partir de la paroi supérieure (11), dans lequel la paroi supérieure (11) et la paroi circonférentielle (12) enferment ensemble un espace d'installation pour le matériau d'installation, dans lequel la boîte de distribution (1) comprend un plan inférieur, opposé à la paroi supérieure, dans laquelle une ouverture d'installation (29) est prévue, dans lequel la paroi circonférentielle (12) est prévue avec une ou plusieurs ouvertures de fil (20) pour que les câblages électriques passent à travers la paroi circonférentielle (12), dans lequel un insert étanche à l'air (50) séparé est prévu, dans lequel l'insert étanche à l'air (50) séparé est configuré pour être monté dans ou sur l'ouverture d'installation (29) pour fermer sensiblement l'ouverture d'installation de manière étanche à l'air, dans lequel la boîte de distribution (1) comprend une paroi inférieure (13), opposée à la paroi supérieure (11), ayant l'ouverture d'installation (29) prévue à l'intérieur de cette dernière, dans lequel l'insert étanche à l'air (50) est configuré pour être reçu à l'intérieur de l'ouverture d'installation (29), dans lequel la paroi inférieure (13) comprend un corps inférieur (28) et un bord d'installation (30) vertical à partir de la paroi inférieure (28), dans lequel l'ouverture d'installation (29) est délimitée par le bord d'installation (30), dans lequel l'insert étanche à l'air (50) comprend un corps d'insert (51), dans lequel le corps d'insert (51) comprend un bord d'insert (52) vertical à partir du corps d'insert (51), et un bord de mise en prise (53) prévu au niveau du rebord du bord d'insert (52) orienté à l'opposé du corps d'insert (51), dans lequel le bord de mise en prise (53) s'étend sensiblement radialement vers l'extérieur par rapport au bord d'insert (52) dans un plan parallèle au corps d'insert (51), dans lequel le bord de mise en prise (53) est configuré pour être en mise en prise avec la circonférence interne du bord d'installation (30) lorsque l'insert étanche à l'air (50) est reçu dans l'ouverture d'installation (29), dans lequel le corps d'insert (51) a un ou plusieurs passages pour que les câblages électriques passent à travers le corps d'insert (51), dans lequel les un ou plusieurs passages sont des fractures cibles (57), chacune des une ou plusieurs fractures cibles (57) comprenant une membrane (58) destinée à être pénétrée par les câblages électriques pour passer à travers l'insert étanche à l'air (50).

2. Ensemble selon la revendication 1, dans lequel le bord d'installation (30) est vertical à partir de la paroi inférieure (28) dans une direction à l'opposé de l'espace d'installation.

3. Ensemble selon l'une quelconque des revendications précédentes, dans lequel l'insert étanche à l'air est réalisé avec un matériau souple, comme le plastique, ou avec un plastique 2K avec un plastique souple et un plastique dur combiné.

4. Ensemble selon l'une quelconque des revendications précédentes, dans lequel la boîte de distribution (1) comprend un couvercle (31) configuré pour être agencé à l'intérieur ou au niveau de l'ouverture d'installation (29), dans lequel l'insert étanche à l'air (50) est configuré pour être placé entre le couvercle et l'espace d'installation, dans lequel le couvercle (31) a un corps de couvercle (32) avec une ou plusieurs ouvertures de câblage (36) pour que les câblages électriques passent à travers le corps de couvercle (32).

5. Ensemble selon la revendication 4, dans lequel les un ou plusieurs passages du corps d'insert (51) sont agencés de sorte qu'ils sont positionnés à proximité d'une ouverture correspondante des une ou plusieurs ouvertures de câblage (36) du corps de couvercle (32), de préférence dans lequel les un ou plusieurs passages sont agencés sensiblement droits au-dessus de l'ouverture correspondante des une ou plusieurs ouvertures de câblage (36).

6. Ensemble selon l'une quelconque des revendications 4 ou 5, dans lequel le couvercle (31) comprend une chambre de plaque à bornes (34) configurée pour recevoir une plaque à bornes (43), dans lequel la chambre de plaque à bornes (34) s'étend dans une direction vers l'insert étanche à l'air (50), et dans lequel l'insert étanche à l'air (50) a une chambre de réception d'insert (54) configurée pour recevoir la chambre de plaque à bornes (34) du couvercle (31) au moins partiellement, de préférence dans lequel la chambre de réception d'insert (54) a une indentation de mise en prise (59), de préférence dans lequel la chambre de réception d'insert (54) a quatre parois latérales (55) et une paroi inférieure (56) qui définissent ensemble un espace de réception pour recevoir la chambre de plaque à bornes (34) du couvercle (31) au moins partiellement, dans lequel l'indentation de mise en prise (59) est partiellement prévue dans l'une des parois latérales (55) et partiellement à l'intérieur de la paroi inférieure (56).

7. Ensemble selon l'une quelconque des revendications 4 à 6, dans lequel le corps de couvercle (32) comprend un ou plusieurs trous débouchants à travers lequel (lesquels) une vis (40) peut passer, de préférence dans lequel le corps de couvercle (32) a un ou plusieurs évidements de vis (39) avec les un ou plusieurs trous débouchants agencés à l'intérieur, dans lequel une tête de vis (41) peut être reçue dans les un ou plusieurs évidements de vis (39).

8. Ensemble selon la revendication 7, dans lequel le corps d'insert (51) comprend un ou plusieurs canaux de fixation (63), chacun formé par une indentation de fixation (64) radialement vers l'intérieur, prévue dans le bord d'insert (52) du corps d'insert (51), dans lequel chacune des une ou plusieurs indentations de fixation (64) a un fond d'indentation (65) avec une ouverture de vis (66) pour permettre le passage d'une vis (40) lorsqu'elle est insérée dans le couvercle (31), dans lequel l'ensemble comprend en outre une ou plusieurs douilles de fixation (67) configurées pour recevoir la (les) vis et pour être reçues dans les un ou plusieurs canaux de fixation (63), serrant ainsi l'insert étanche à l'air (50) entre le couvercle (31) et les une ou plusieurs douilles de fixation (67), dans lequel la boîte de distribution (1) comprend un ou plusieurs bus de réception (25) avec une ouverture de réception (27) et un canal de réception, dans lequel les un ou plusieurs bus de réception (25) sont agencés du côté interne (22) de la boîte de distribution (1) et agencés pour recevoir les une ou plusieurs douilles de fixation (67) pour fixer le couvercle (31) et l'insert étanche à l'air (50) à la boîte de distribution (1).

9. Ensemble selon la revendication 8, dans lequel chacune des une ou plusieurs douilles de fixation (67) a une première partie (68) et une seconde partie (69), de préférence différente de la première partie, de préférence dans lequel la première partie est une partie tubulaire (68) et la seconde partie est une partie polygonale (69), dans lequel le canal de réception de chacun des un ou plusieurs bus de réception (25) comprend une partie tubulaire pour recevoir la partie tubulaire (68) de l'une des une ou plusieurs douilles de fixation (67), et une partie polygonale (69) pour recevoir la partie polygonale de l'une des une ou plusieurs douilles de fixation (67), ou bien dans lequel chacune des une ou plusieurs douilles de fixation (67) comprend un écrou.

10. Procédé pour monter un insert étanche à l'air (50) séparé dans une boîte de distribution d'un ensemble d'une boîte de distribution (1) et de matériel d'installation électrique avec des câblages électriques selon l'une quelconque des revendications 1 à 9, le procédé comprenant les étapes suivantes :
installer une boîte de distribution (2) sur une paroi creuse, comme un plafond creux (2) ;
insérer le matériel d'installation électrique avec des câblages électriques dans la boîte de distribution (1) ;
établir les connexions électriques entre les câblages électriques du matériel d'installation électrique ; et
monter l'insert étanche à l'air (50) séparé dans ou au niveau de l'ouverture d'installation (29) de la boîte de distribution (1), de sorte que l'ouverture d'installation est fermée sensiblement de manière étanche à l'air.

11. Procédé selon la revendication 10, dans lequel la boîte de distribution (1) comprend un couvercle (31) configuré pour être agencé dans ou au niveau de l'ouverture d'installation (29), le procédé comprenant en outre l'étape suivante :
agencer l'insert étanche à l'air (50) au niveau du couvercle (31), de préférence d'un côté du couvercle (31) faisant face à l'espace d'installation de la boîte de distribution (1).
